# EUROPÄISCHE PATENTSCHRIFT

(11) **EP 2 209 600 B1**
(45) Veröffentlichungstag und Bekanntmachung des Hinweises auf die Patenterteilung: **27.06.2012**
(21) Anmeldenummer: 08849477.8
(22) Anmeldetag: 10.11.2008
(51) Int. Cl.: B29B 11/16, B29C 70/30, D04H 1/00

(54) **VORRICHTUNG ZUM HERSTELLEN VON FORMTEILEN AUS FASERMATERIAL**
DEVICE FOR PRODUCING MOULDED PIECES FROM FIBROUS MATERIAL
DISPOSITIF DE FABRICATION DE CORPS MOULÉS EN MATÉRIAU FIBREUX

(30) Priorität: 13.11.2007 DE 102007054424
(43) Veröffentlichungstag der Anmeldung: 28.07.2010
(73) Patentinhaber: Robert Bürkle GmbH, 72250 Freudenstadt (DE)
(72) Erfinder: HEINL, Manfred, 65479 Raunheim (DE)
(74) Vertreter: Lemcke, Brommer & Partner
(86) Internationale Anmeldenummer: PCT/EP2008/009459
(87) Internationale Veröffentlichungsnummer: WO 2009/062646

(56) Entgegenhaltungen:
- EP-A- 0 894 885
- DE-B3- 10 324 735

## Beschreibung

Die Erfindung betrifft eine Vorrichtung zum Herstellen dreidimensionaler Formteile aus Fasermaterial unter Verwendung einer mehrteiligen Form, deren Innenseite zumindest teilweise die Kontur des Formteiles bestimmt, wobei die Fasern durch eine Luftströmung über zumindest eine Düse in die Form eingeblasen werden und die Luft sodann durch Öffnungen der Form entweicht, so dass sich die Fasern an der Innenseite der Form anlagern, worauf die Fasern gegebenenfalls lokal verdichtet werden, bevor sie durch Wärmezufuhr miteinander verklebt und schließlich als Formteil aus der Form entnommen werden.

Eine derartige Vorrichtung, gemäß dem Oberbegriff des Anspruchs 1, ist durch die DE 103 24 735 bekannt geworden.

Daneben ist es durch die DE 2318501 bei der Herstellung von Hohlkörper aus Kunststofffasern bekannt, einen Vorformling herzustellen, wobei mit einer rotierenden gelochten Form gearbeitet wird. Diese Form ist an einem Ende offen und wird dort von einem Rohr durchquert, das sowohl die Fasern wie auch einen Kleber in den Innenraum der Form einbläst. Dieses Rohr wird während der Rotation der Form allmählich aus der Form herausgezogen, damit die Form über ihre ganze Länge mit Fasern beaufschlagt wird.

Dieses Verfahren eignet sich also nur für Hohlkörper, die an einem Ende offen sind, damit dort das Einblasrohr angeordnet werden kann. Außerdem ist die Beweglichkeit des Einblasrohres sehr beschränkt, was die gleichmäßige Füllung der Form erschwert. Nicht zuletzt muss die Form während des Einblasens rotieren, was zu zusätzlichem Herstellungsaufwand führt.

Demgegenüber wird in der vorliegenden Anmeldung angestrebt, geschlossene Formkörper herstellen und mit einer im Wesentlichen stationären ruhenden Form arbeiten zu können.

Die vorliegende Erfindung geht von der Erkenntnis aus, dass es bei der DE 103 24 735 bei bestimmten Formen problematisch ist, eine homogene Faser-Verteilung zu realisieren oder aber Formteil-Bereiche mit gezielt unterschiedlicher Dichte herzustellen. Deshalb liegt der vorliegenden Erfindung die Aufgabe zugrunde, eine Vorrichtung anzugeben, die eine individuelle Steuerung der Faser-Verteilung in der Form erlaubt, auch wenn die Form eine sehr unregelmäßige dreidimensionale Kontur hat. Außerdem soll sich die Erfindung durch kostengünstigen und zuverlässigen Aufbau auszeichnen.

Diese Aufgabe wird erfindungsgemäß dadurch gelöst, dass die Blasrichtung der Düse verschwenkbar ist und die Schwenkachse nahe der Außenseite des Formteiles verläuft und dass das Einblasen der Fasern über mehrere Düsen erfolgt, die zu unterschiedlichen Zeitpunkten aktiviert werden.

Hierdurch ergibt sich der Vorteil, dass wie in der DE 103 24 735 mit geschlossenen stationären Formen gearbeitet und geschlossene, nicht-hohle Formkörper erzeugt werden können, dass jedoch aufgrund der stark verstellbaren Blasrichtung eine viel gezieltere Füllung der Form auch seitlich der Düse und bei komplizierter Kontur möglich ist, insbesondere einzelne Bereiche in der Form mit mehr oder weniger Fasern beaufschlagt werden können. Dadurch lässt sich eine individuelle Steuerung der Belegungsdichte innerhalb des Formteiles erreichen. Außerdem kann auch die Wandstärke des Formteiles lokal beeinflusst werden. Nicht zuletzt kann durch das Einblasen zu unterschiedlichen Zeitpunkten eine gegenseitige Störung ausgeschlossen werden.

Es hat sich als günstig erwiesen, wenn die Düse oder zumindest ihre Blasrichtung beim Einblasvorgang eine hin- und hergehende Bewegung mit einer Frequenz von zumindest 0,3 Hz durchführen. Diese Bewegung die nur wenige Zentimeter beziehungsweise Winkelgrade beträgt und zweckmäßig in Vertikalrichtung, ebenso aber auch horizontal oder in einer Zwischenrichtung erfolgen kann, überlagert sich der eingangs beschriebenen Schwenkbewegung und begünstigt den Füllvorgang.

Eine besonders zweckmäßige Weiterbildung der Erfindung besteht darin, dass mehrere Düsen, vorzugsweise jeweils über Ventile, insbesondere Quetschventile, an eine gemeinsame Ringleitung angeschlossen sind. Die Düsen sind dabei über den Umfang der Form verteilt angeordnet. Dadurch kann die Form mit einem einzigen Gebläse über mehrere Düsen aus verschiedenen Positionen gefüllt werden. Außerdem hat die Ringleitung den Vorteil, dass die Faserströmung permanent aufrechterhalten werden kann, weil die genannten Ventile zur zeitlich sequentiellen Steuerung des Füllvorganges dienen. Ein ungewolltes Absetzen von Fasern in der Förderleitung wird dadurch ausgeschlossen.

Zu dem gleichen Zweck kann es zweckmäßig sein, vor oder an den Düsen eine verschließbare Öffnung vorzusehen, durch welche die Leitung und gegebenenfalls der anschließende Düsenbereich frei geblasen werden kann.

Des Weiteren hat es sich als günstig erwiesen, wenn während des Einblasens der Fasern eine Messung des Luftdruckes erfolgt und der Füllvorgang bei Erreichen eines bestimmten Grenzdruckes beendet wird. Der Druck kann dabei an verschiedenen Stellen der Form oder nahe der Düsen oder im Bereich der Zuleitung gemessen werden. Besonders günstig ist es, in die Düsen unmittelbar einen Drucksensor einzubauen. Generell steigt der Luftdruck mit zunehmender Faser-Belegung der Form an, weil der Durchströmwiderstand durch die gelochte Form in Abhängigkeit von der Belegungsstärke zunimmt. Dadurch hat man ein fein ansprechendes Kriterium, um die Belegungsstärke der Form zu erfassen und den Füllvorgang zum richtigen Zeitpunkt zu beenden.

Die Verschwenkung der Blasrichtung sollte so gewählt werden, dass auch die links und rechts oder oben und unten an die Düse angrenzenden Wandbereiche der Form beaufschlagt werden können. Zweckmäßig erfolgt die Schwenkbewegung mit zumindest ¼ Hz, das heißt, dass die Blasrichtung spätestens nach 4 Sekunden wieder die Ausgangsrichtung erreicht. Bevorzugt wird mit Frequenzen zwischen ½ Hz bis 5 Hz gearbeitet.

Für die Verstellung der Blasrichtung bieten sich dem Fachmann verschiedene Möglichkeiten. Zum einen kann die Blasrichtung dadurch verändert werden, dass die Düse selbst verschwenkt wird. Die Schwenkbewegung kann um eine ortsfeste Schwenkachse erfolgen, stattdessen kann aber auch mit verfahrbarer Schwenkachse gearbeitet werden, indem die Düse längs entsprechend verlaufender Kulissenbahnen geführt wird.

Zum anderen kann die Blasrichtung auch dadurch beeinflusst werden, dass im Austrittsbereich der Düse verstellbare Ablenkflügel angeordnet sind oder dass die Düse einen verstellbaren Düsen-Fortsatz aufweist, der über ein Übersetzungsgetriebe angetrieben wird. In beiden Fällen kann die Düse ortsfest an der Form montiert werden. Es besteht aber auch die Möglichkeit, zusätzlich zur verstellbaren Lagerung der Düse noch mit Ablenkflügeln zu arbeiten, um durch die Kombination beider Maßnahmen eine besonders starke Ablenkung der Blasrichtung zu realisieren.

Schließlich besteht auch die Möglichkeit, die Blasrichtung dadurch zu beeinflussen, dass mit einem zusätzlichen Ablenkstrahl gearbeitet wird, der von der Seite kommt und dadurch die ursprüngliche Blasrichtung verändert. Dieser Ablenkstrahl ist in seiner Stärke und/oder Blasrichtung zweckmäßig selbst verstellbar, um ihn an die Anforderungen der jeweiligen Form anpassen zu können.

Die Verstellung der Düse und/oder ihrer Ablenkflügel und/oder die Aktivierung und gegebenenfalls Verstellung des Ablenkstrahles erfolgen zweckmäßig motorisch und programmgesteuert. Die Programmsteuerung hat den Vorteil, dass man zunächst Probeläufe mit unterschiedlichen Parametern durchführen kann, bis das Formteil die gewünschten Produkteigenschaften aufweist. Die hierzu passenden Parameter werden dann in die Programmsteuerung eingespeichert.

Die Lagerung der Düse erfolgt zweckmäßig an der Form selbst, insbesondere an der Oberform, die lediglich einen Vertikalhub durchführt. Es liegt aber auch im Rahmen der Erfindung, die Düse separat, etwa am Pressengestell zu montieren und sie erst beim Füllvorgang an eine entsprechende Einblasöffnung der Form zu verfahren und sie gegebenenfalls dort anzukoppeln.

Um den Füllvorgang individuell an lokal unterschiedliche Vorgaben hinsichtlich der Faserdichte anzupassen, kann die Form in ihrem gelochten Bereich verstellbare Klappen aufweisen, mittels derer die lokale Luftabfuhr mehr oder weniger stark gedrosselt werden kann. Diese Klappen können insbesondere dann eingesetzt werden, wenn mit temporären Hilfsformen gearbeitet wird.

Schließlich liegt es im Rahmen der Erfindung, vor der Verklebung der Fasern, insbesondere vor deren Endverdichtung zumindest eine Decklage in zumindest einen Teil der Form hineinzulegen oder auf die bereits eingeblasenen Fasern aufzulegen. Diese Decklage kann als Dekorfolie zur Verschönerung des Aussehens verwendet werden, ebenso aber auch eine zusätzliche Funktion haben, etwa zur Bildung einer rutschhemmenden oder verschleißfesten Schicht, oder nur um dem Formteil eine homogene glatte Außenseite zu verleihen.

Verfahrenstechnisch ist es besonders günstig, wenn die Decklage bereits vor dem Einblasen der Folie in die Form eingelegt wird. Dabei kann sie durch Unterdruck an der Unter- und/oder Oberform angesaugt und gehalten werden oder lokal durch Klemm- oder Schnappverbindungen in der Form befestigt werden, damit sie beim anschließenden Einblasen der Fasern nicht verrutscht.

Materialmäßig hat man bei der genannten Decklage nahezu beliebige Auswahl. Jedoch sollte es sich grundsätzlich um ein Material mit gewisser Luftdurchlässigkeit handeln, damit der Einblasvorgang wie auch das spätere Durchströmen mit Heißluft nicht beeinträchtigt wird. Insbesondere kommen Gewebe-, Gewirk-, Gestricke- oder Vlieslagen auch in Form teppichartiger Matten und dergleichen in Betracht. Wenn die Decklagen aber erst nach dem Einblasen der Fasern in die Form eingelegt werden, können auch relativ dichte Decklagen verwendet werden.

Weitere Merkmale und Vorteile ergeben sich aus nach der nachfolgenden Beschreibung von Ausführungsbeispielen anhand der Zeichnung; dabei zeigt:
- Figur 1:: eine schematische Darstellung der Form mit daran angeordneten Einblasdüsen in der Seitenansicht;
- Figur 2:: eine ähnliche Form in der Ansicht von oben;
- Figur 3:: eine vergrößerte Darstellung einer Schwenkdüse mit Antrieb;
- Figur 4:: die Lagerung der Schwenkdüse an der Formwand;
- Figur 5:: eine Düse mit schwenkbaren Ablenkflügeln;
- Figur 6:: eine Düse mit Ablenkstrahlen;
- Figur 7:: eine Seitenansicht der Anlage mit Ringleitung;
- Figur 8:: eine Draufsicht auf Figur 7 von oben und
- Figur 9:: eine Seitenansicht der geöffneten Form bei einem alternativen Formteil.

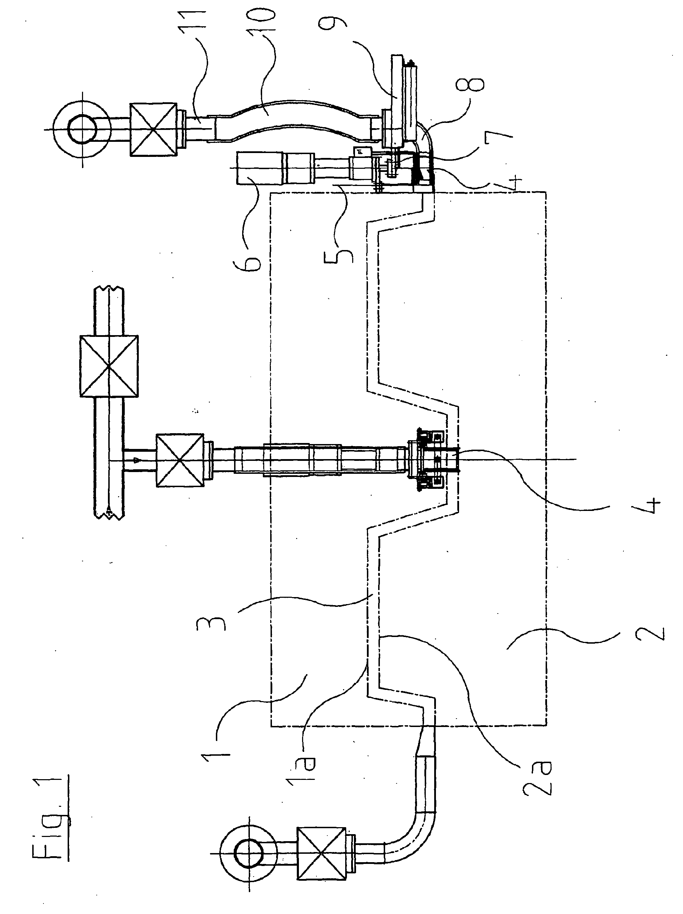

In Figur 1 erkennt man eine Form, bestehend aus Oberform 1 und Unterform 2, die zusammengefahren sind, derart, dass ihre aufeinander zugewandte Innenseiten 1a und 2a einen abgeschlossenen Zwischenraum 3 bilden. Dieser Zwischenraum kann bereits die Kontur des herzustellenden dreidimensionalen Formteiles bestimmen; zweckmäßig ist es aber, wenn Oberform 1 und Unterform 2 zunächst zur Herstellung eines Vorformlinges dienen und dieser Vorformling anschließend durch eine andere Oberform zu dem endgültigen Formteil verdichtet wird. Die Innenseiten 1a und 2a der Form sind üblicherweise siebartig gelocht, so dass die mit Kunststofffasern beladene seitlich in den Zwischenraum 3 einströmende Luftströmung aus dem Zwischenraum 3 entweichen kann, während sich die Fasern im Zwischenraum anlagern. Dabei kann die Luftdurchlässigkeit der Innenwände 1a und 2a lokal unterschiedlich sein, um die Faser-Belegung, also die Faserdichte innerhalb des Zwischenraumes 3 variieren zu können.

Wesentlich ist nun, dass zumindest einige der an den Zwischenraum 3 angeschlossenen Düsen 4 derart schwenkbar gelagert sind, das ihre Schwenkachse 5 nahe dem Außenrand des Formteiles, als nahe der Formwand, positioniert ist.

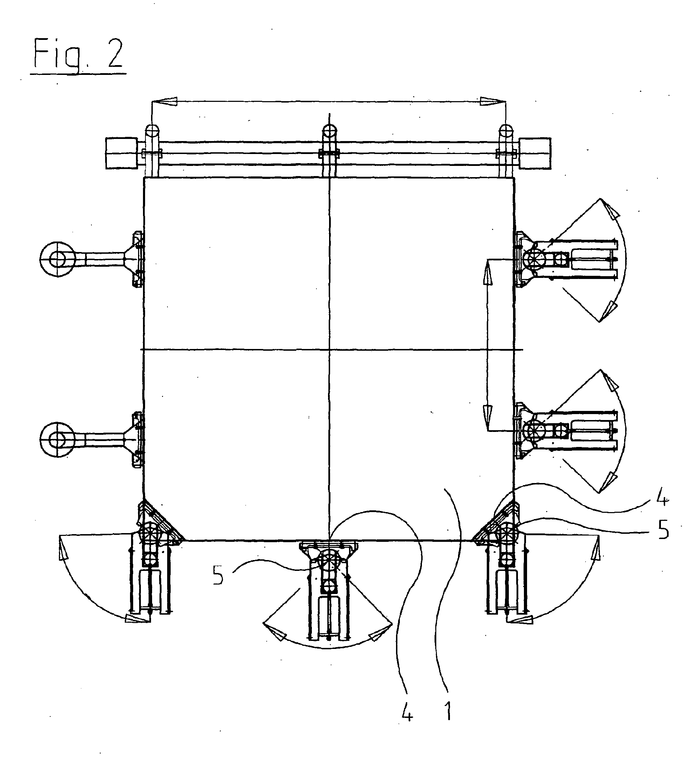

Im Ausführungsbeispiel hat das herzustellende Formteil eine überwiegend horizontale Erstreckung. Daher verlaufen die Schwenkachsen 5 für die Düsen vertikal, so dass die Düsen horizontal über den ganzen Querschnitt des Formteiles oder Teilbereiche hiervon verschwenkt werden kann, wie dies vor allem aus Figur 2 hervorgeht. Stattdessen oder zusätzlich ist auch eine Verschwenkung um eine etwa horizontale Schwenkachse - je nach den Abmessungen des Formteiles - sinnvoll.

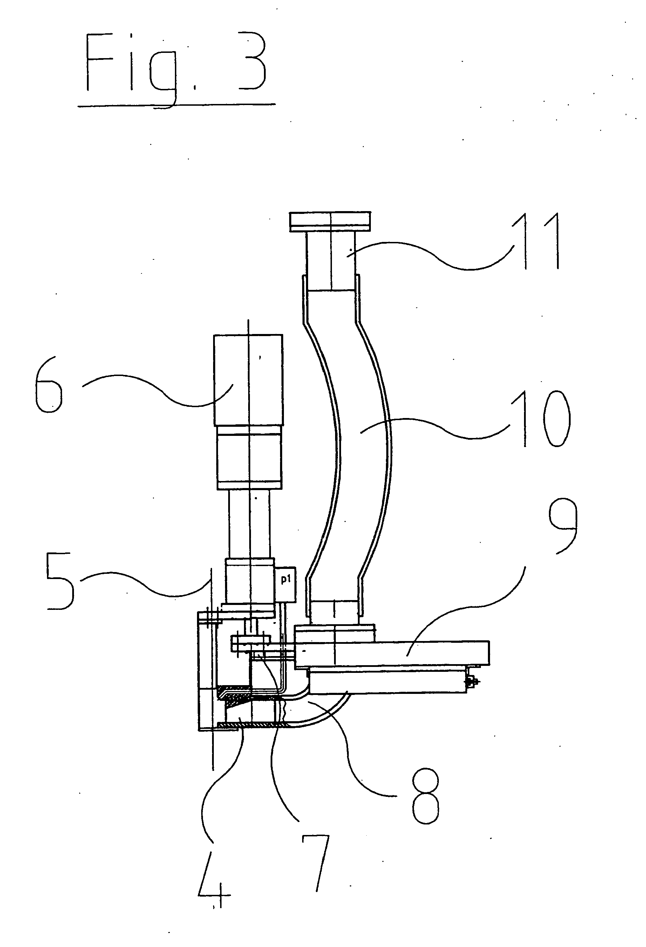

Die schwenkbare Lagerung ist in Figur 1 und 3 näher dargestellt. Man erkennt dort einen Schwenkmotor 6, der über Schwenkhebel 7 die Düse 4 mit samt ihrer Anschlussleitung 8 und einem Anschlussflansch 9 um eine fiktive, nahezu mit dem Form-Außenrand fluchtende Vertikalachse 5 hin und her schwenkt. Der Anschlussflansch 9 ist seinerseits über eine flexible Leitung 10 an einen ortsfesten Anschluss 11 angeschlossen, der mit einer nicht näher dargestellten Ringleitung verbunden ist. Aus dieser Ringleitung wird die Düse 4 von oben über eine 90°-Umlenkung mit einer das Fasermaterial liefernden Luftströmung beaufschlagt.

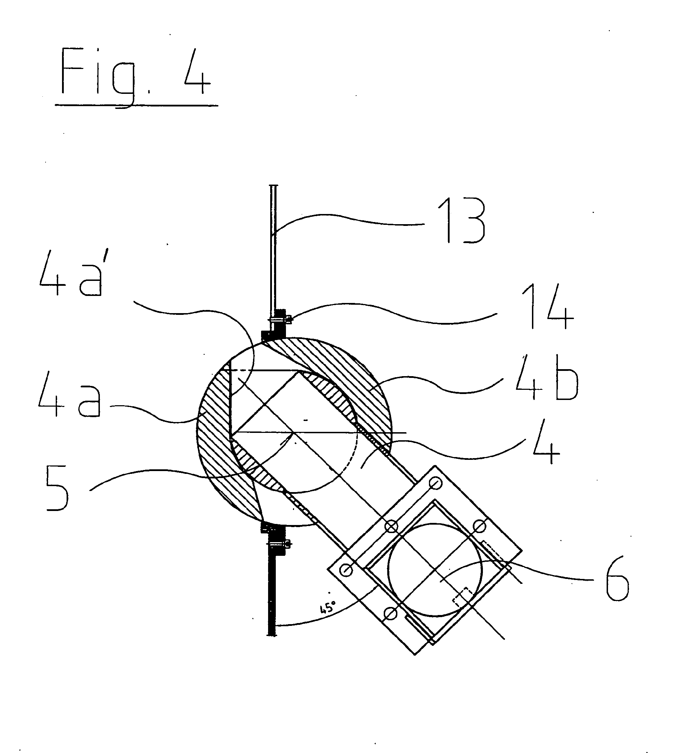

Figur 4 zeigt die Schwenklagerung an der den Zwischenraum 3 begrenzenden Formaußenwand, die den oberen rahmenartigen Rand der Unterform 2 bildet, wobei die Unterform bevorzugt in Ruhe bleibt, wogegen die Oberform vertikal verfahrbar ist. Man sieht hier eine Lagerbuchse 14, in welcher ein Düsen-Fortsatz bestehend aus 2 unabhängig verstellbaren Ablenkbacken 4a und 4b, die in die Form hinein schwenkbar sind, und zwar wie in den vorherigen Figuren ausgeführt um eine Vertikalachse, die etwa mit der Formaußenwand 13 fluchtet.

Im Inneren des Düsen-Fortsatzes 4a ist die Düse 4 ihrerseits schwenkbar gelagert, und zwar ebenfalls um eine Vertikalachse.

Die Düse 4 und ihr Fortsatz 4a sind über ein Übersetzer-Getriebe miteinander gekoppelt derart, dass eine Verschwenkung der Düse 4 eine stärkere Verschwenkung des Fortsatzes 4a bewirkt. Man sieht in Figur 4, dass die Düse 4 aus der Neutralstellung senkrecht zur Formwand um 45° zur Seite - in der Zeichnung nach unten - verschwenkt worden ist. Dabei hat das Übersetzungs-Getriebe dafür gesorgt, dass der Ablenkbacken 4a um 90° in der gleichen Schwenkrichtung verschwenkt worden ist, derart, dass seine vorgeschwenkte Innenwand 4a' innerhalb der Form nahezu parallel zur Formwand 13 verläuft, wogegen die gegen-überliegende zurückgeschwenkte Innenflanke nur um ca. 30° verschwenkt wird und etwa an der Lagerbuchse 14 ausläuft. Auf diese Weise gelingt es, durch Verschwenkung der Düse um nur 45° den Düsen-Fortsatz 4a soweit zu verschwenken, dass das ausströmende Fasermaterial nahezu parallel zur Wand 13 in die Form eingeblasen wird.

Gleiches gilt entsprechend, wenn die Düse 4 in umgekehrte Richtung um 45° aus der Neutralposition herausgeschwenkt wird; dann erfolgt der Faserstoff-Austrag in der Zeichnung etwa parallel zur unteren Formwand.

Im Ergebnis führt also eine Verschwenkung der Düse 4 um 90° zu einer erheblich stärkeren Verschwenkung des Düsen-Fortsatzes 4a. Selbstverständlich könnte das Übersetzungsverhältnis noch verstärkt werden. In der Regel genügt es aber, wenn die nach vorn geschwenkte Innenwand 4a' annähernd parallel zur Formaußenwand verläuft.

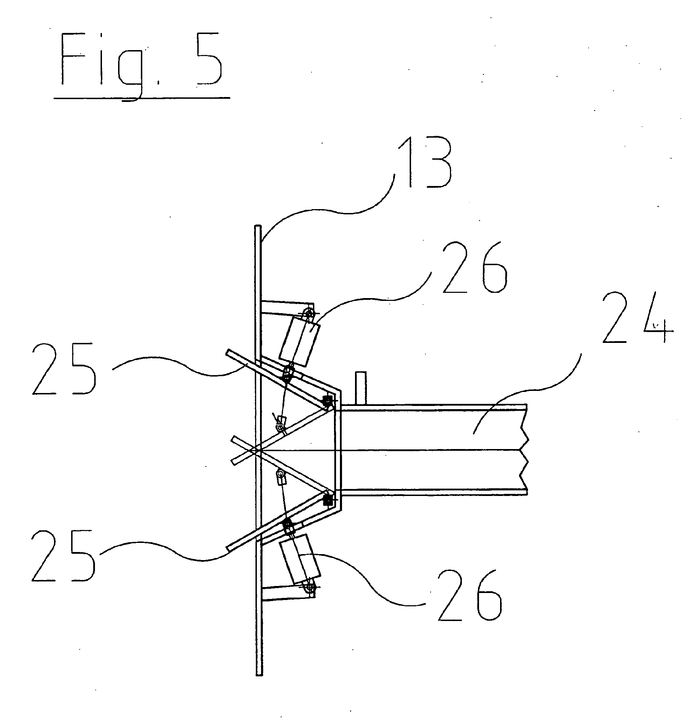

Figur 5 zeigt eine alternative Bauform für das Verschwenken der Ausblasrichtung. In diesem Fall kann die Düse 24 ortsfest an der Formwand 13 montiert sein, denn im Austrittsquerschnitt der Düse sind individuell schwenkbare Ablenkflügel 25 gelagert. Sie werden durch Stellmotoren 26 in die gewünschte Winkellage verstellt.

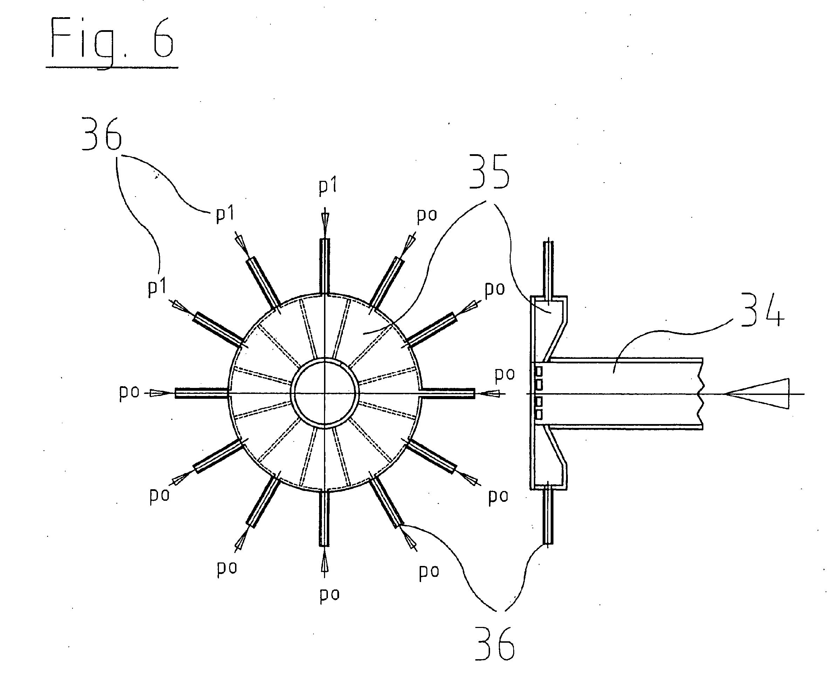

Figur 6 zeigt eine dritte Alternative, bei der die Düse 34 ebenfalls ortsfest an der Formwand 13 montiert sein kann. Hier erfolgt die Verschwenkung der Blasrichtung durch eine seitlich zugeführte Ablenkströmung. Zu diesem Zweck ist die Düse nahe ihrem Austrittsquerschnitt von einer Ringkammer 35 umgeben und diese Ringkammer kann über eine Vielzahl über den Umfang verteilter Luft-Zuführleitungen 36 wahlweise über einen Teil ihres Umfanges mit Druckluft beaufschlagt werden. Diese Druckluft lenkt dann die Luftströmung beim Passieren der Düse 34 gezielt in eine gewünschte Richtung ab.

Durch Umschalten der Druckluft beaufschlagten Leitungen 36 lassen sich die Fasern definiert in eine neue Richtung steuern.

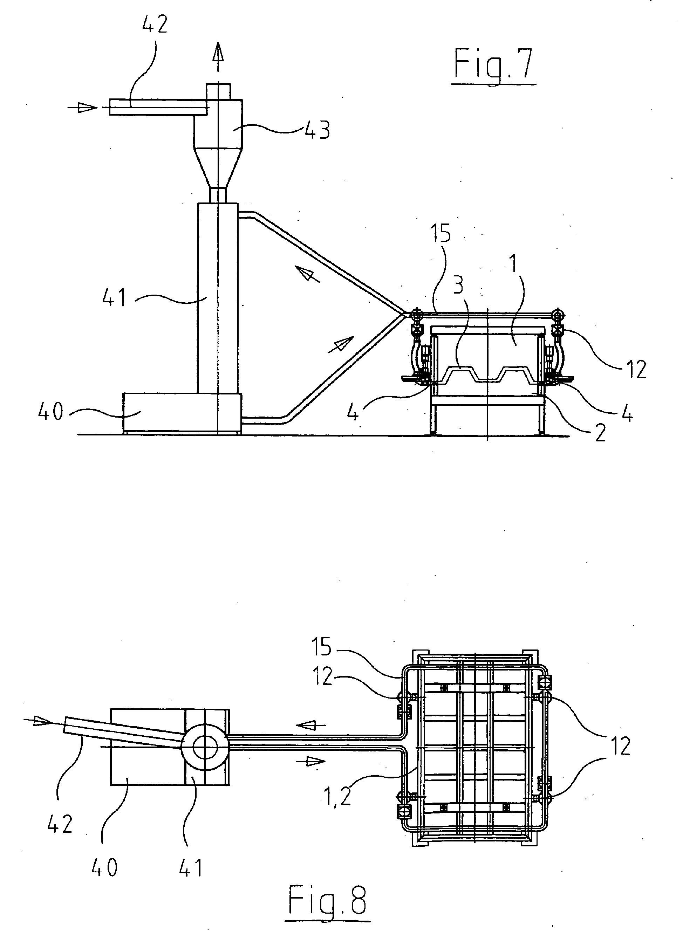

Die Figuren 7 und 8 zeigen eine Gesamtansicht der Anlage. Man sieht zunächst rechts den aus Oberform 1 und Unterform 2 bestehenden Formkasten mit mehreren am Umfang längs des Zwischenraumes 3 verteilten Düsen 4. All diese Düsen sind jeweils über Quetschventile 12 an eine gemeinsame Ringleitung 15 angeschlossen. Diese Ringleitung ist ihrerseits an ein Gebläse 40 angeordnet und wird dadurch mit einem Faser-beladenen Luftstrom beaufschlagt. Oberhalb des Gebläses 40 ist eine Vorratskammer 41 angeordnet, an deren oberen Ende der Rücklauf der Ringleitung 15 mündet. Die Faserzufuhr zur Vorratskammer 41 erfolgt in an sich bekannter Weise an deren Oberseite über eine Leitung 42, die über einen Lufttrenner 43 in die Vorratskammer 41 mündet.

Der Verfahrensablauf ist bei allen Ausführungsvarianten wie folgt: Zunächst wird der Zwischenraum 3 über die am Form-Umfang verteilten Düsen 4 mit Fasern beaufschlagt, bis der gewünschte Füllgrad und die gewünschte Verteilung erreicht ist. Die Fasern sind entweder mit heiß siegelbarem Material überzogen oder mit Bindefasern vermischt.

Falls hohe Dichteunterschiede im Formteil angestrebt werden, empfiehlt es sich, zunächst wie bekannt mit mindestens einer temporären Hilfsoberform zu arbeiten, die lokal einen größeren Zwischenraum erzeugt, als es dem Formteil entspricht, diese Hilfsoberform nach dem Füllvorgang zu entnehmen, insbesondere durch Hochfahren der Oberform 1 und sodann eine andere Oberform, deren Innenwand 1 a genau der Kontur des gewünschten Formteiles entspricht, abzusenken, wodurch eine lokale Verdichtung der Fasern stattfindet. Dabei kann die temporäre Hilfsoberform, aber auch die endgültige Oberform verstellbare Klappen aufweisen, um die aus der Form abströmende Luft lokal mehr oder weniger zu drosseln.

Hierauf wird dann in der Verdichtungsstation, bevorzugt aber nach Verfahren von Oberform und Unterform in eine andere Station, Heißluft durch das im Zwischenraum 3 gefangene Fasermaterial hindurchgeleitet, um die Fasern in an sich bekannter Weise miteinander zu verkleben oder zu verschweißen, so dass schließlich das fertige Formteil entsteht.

Vor dem Öffnen der Form und der Entnahme des Formteiles wird es im Allgemeinen noch mit Kühlluft durchströmt, um die Aushärtung des Formteiles zu bewirken und die Taktzeit zu verkürzen.

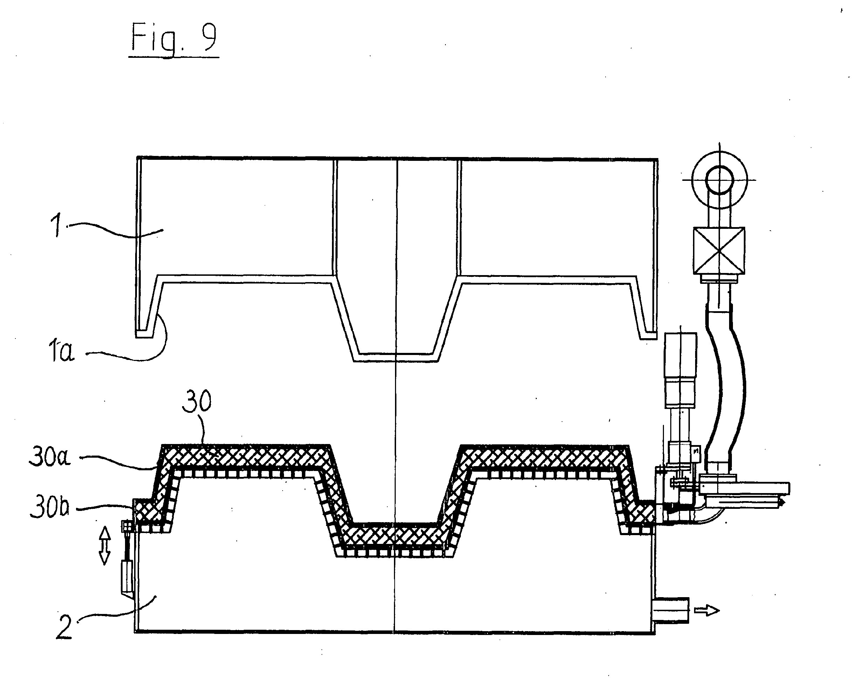

Figur 9 zeigt eine Seitenansicht der geöffneten Form bei einem alternativen Formteil. Dabei erkennt man ein fertiges Formteil 30, das an seiner Unter- und Oberseite mit einer Decklage in Form einer Dekorfolie 30a beziehungsweise 30b kaschiert ist. Diese Decklage kann vor dem Einblasen der Fasern in die Form eingelegt und gegebenenfalls daran befestigt werden. Wird jedoch mit temporären Hilfsformen gearbeitet, so empfiehlt es sich, die Decklage erst dann anzubringen, wenn die endgültige Form zum Einsatz kommt, also die Endverdichtung des Formteiles stattfindet. Wird beispielsweise mit einer temporären Hilfsoberform gearbeitet, so legt man die Dekorfolie zunächst nur in das untere Formteil, führt die Vorverdichtung also ohne obere Decklage durch und setzt letztere erst dann ein, wenn das endgültige obere Formteil zum Einsatz kommt.

Als Decklage wird ein Stoff mit hoher Luftdurchlässigkeit, insbesondere ein Gewebe, Gewirk, Gestricke oder Vlies verwendet, um das Durchströmen des Formteiles mit Heiß- und Kühlluft möglichst wenig zu beeinträchtigen.

Die Verbindung der Decklage mit dem Formteil kann durch Verkleben erfolgen, zweckmäßig aber durch das gleiche Bindemittel, mit dem auch die Fasern untereinander verbunden werden.

## Patentansprüche

1. Vorrichtung zum Herstellen dreidimensionaler Formteile (30) aus Fasermaterial unter Verwendung einer mehrteiligen Form (1, 2), deren Innenseite (1a, 2a) zumindest teilweise die Kontur des Formteiles bestimmt, wobei die Fasern durch eine Luftströmung über zumindest eine Düse (4) in die Form eingeblasen werden und die Luftströmung sodann durch Öffnungen der Form entweicht, so dass sich die Fasern an der Innenseite der Form anlagern, worauf die Fasern gegebenenfalls noch lokal verdichtet werden, bevor sie durch Wärmezufuhr miteinander verklebt und schließlich nach dem Abkühlen als Formteil (30) aus der Form (1, 2) entnommen werden,
**dadurch gekennzeichnet,**
**dass** die Blasrichtung der Düse (4, 24, 34) schwenkbar ist und die Schwenkachse nahe der Außenseite des Formteiles verläuft und dass das Einblasen der Fasern über mehrere Düsen (4, 24, 34) erfolgt, die zu unterschiedlichen Zeitpunkten aktiviert werden.

2. Vorrichtung nach Anspruch 1,
**dadurch gekennzeichnet,**
**dass** die Düse (4, 24, 34) oder ihre Blasrichtung beim Einblasvorgang eine hin und her Bewegung mit einer Frequenz von zumindest 0,3 Hz durchführen.

3. Vorrichtung nach Anspruch 1,
**dadurch gekennzeichnet,**
**dass** mehrere Düsen (4, 24, 34), vorzugsweise jeweils über Ventile, an eine gemeinsame Ringleitung angeschlossen sind.

4. Vorrichtung nach Anspruch 1,
**dadurch gekennzeichnet,**
**dass** an oder vor der Düse (4, 24 34) eine verschließbare Öffnung zum Freiblasen angeordnet ist.

5. Vorrichtung nach Anspruch 1,
**dadurch gekennzeichnet,**
**dass** während des Einblasens der Fasern eine Luftdruck-Messung in der Düsen-Zuleitung, in der Düse oder in der Form erfolgt und der Füllvorgang bei Erreichen eines bestimmten Grenzdruckes beendet wird.

6. Vorrichtung nach Anspruch 5,
**dadurch gekennzeichnet,**
**dass** es sich bei der Luftdruck-Messung um eine Messung des Staudruckes handelt.

7. Vorrichtung nach Anspruch 1,
**dadurch gekennzeichnet,**
**dass** die Verstellung der Blasrichtung durch eine Verstellung der Düse (4) erfolgt, insbesondere durch einen ihr gegenüber verstellbaren Düsen-Fortsatz (4a, 4b).

8. Vorrichtung nach Anspruch 1,
**dadurch gekennzeichnet,**
**dass** die Verstellung der Blasrichtung durch eine Verstellung von im Ausströmbereich angeordneten Ablenkflügeln (25) erfolgt.

9. Vorrichtung nach Anspruch 1,
**dadurch gekennzeichnet,**
**dass** die Verstellung der Blasrichtung durch eine zusätzliche, von der Seite kommenden Ablenkströmung erfolgt, wobei die Ablenkströmung insbesondere mengen- und/oder richtungsmäßig verstellbar ist.

10. Vorrichtung nach Anspruch 1 oder 8,
**dadurch gekennzeichnet,**
**dass** die Verstellung der Düse (4) und/oder ihrer Ablenkflügel (25) und/oder die Aktivierung der Ablenkströmung motorisch und programmgesteuert erfolgt.

11. Vorrichtung nach Anspruch 1,
**dadurch gekennzeichnet,**
**dass** die Düse (4, 24, 34) an einem Formteil (1, 2) selbst gelagert ist.

12. Vorrichtung, nach Anspruch 1,
**dadurch gekennzeichnet,**
**dass** eine Vor- oder Endverdichtung der Fasern mittels einer temporären Hilfsoberform erfolgt.

13. Vorrichtung, insbesondere nach Anspruch 1 oder 12,
**dadurch gekennzeichnet,**
**dass** die Form oder die temporäre Hilfsoberform verstellbare Klappen zur Steuerung der lokalen Luftabfuhr aufweist.

14. Verfahren unter Verwendung einer Vorrichtung nach Anspruch 1,
**dadurch gekennzeichnet,**
**dass** vor der Verklebung, insbesondere vor der Endverdichtung der Fasern zumindest eine Decklage (30a, 30b) in zumindest einen Teil der Form (1, 2) hineingelegt oder auf die eingeblasenen Fasern aufgelegt wird.

15. Verfahren nach Anspruch 14,
**dadurch gekennzeichnet,**
**dass** bereits vor dem Einblasen der Fasern die Decklage (30a, 30b) in die Form (1, 2) eingelegt wird, insbesondere dass die Decklage (30a, 30b) durch Anlegen von Unterdruck oder lokal durch Klemm- oder Schnappverbindungen in der Form (1, 2) gehalten wird.

## Claims

1. Apparatus for producing three-dimensional moulded parts (30) made from fibre material using a multi-part mould (1, 2), of which the inner face (1a, 2a) at least partially determines the contour of the moulded part, wherein the fibres are blown by an air flow via at least one nozzle (4) into the mould and the air flow then escapes through openings in the mould, so that the fibres accumulate on the inner face of the mould, whereupon the fibres are optionally compressed locally before they are bonded to one another by the supply of heat and finally are removed from the mould (1, 2) as a moulded part (30) after cooling, **characterised in that** the blowing direction of the nozzles (4, 24, 34) is pivotable and the pivot axis extends close to the outer face of the moulded part and that the fibres are blown in via several nozzles (4, 24, 34) which are activated at different times.

2. Apparatus as claimed in Claim 1, **characterised in that** during the blowing operation the nozzle (4, 24, 34) or the blowing direction thereof carries out a movement to and fro with a frequency of at least 0.3 Hz.

3. Apparatus as claimed in Claim 1, **characterised in that** a plurality of nozzles (4, 24, 34) are connected, preferably via respective valves, to a common ring line.

4. Apparatus as claimed in Claim 1, **characterised in that** a closable opening for free blowing is disposed on or in front of the nozzle (4, 24,34).

5. Apparatus as claimed in Claim 1, **characterised in that** during the blowing in of the fibres an air pressure measurement is carried out in the nozzle or in the mould and the filling operation is ended when a specific limiting pressure is reached.

6. Apparatus as claimed in Claim 5, **characterised in that** the air pressure measurement is a measurement of the back pressure.

7. Apparatus as claimed in Claim 1, **characterised in that** the adjustment of the blowing direction takes place by an adjustment of the nozzle (4), in particular by a nozzle protection (4a, 4b) which can be adjusted relative thereto.

8. Apparatus as claimed in Claim 1, **characterised in that** the adjustment of the blowing direction takes place by an adjustment of deflection vanes (25) disposed in the outflow region.

9. Apparatus as claimed in Claim 1, **characterised in that** the adjustment of the blowing direction takes place by an additional deflection flow coming from the side, wherein the deflection flow is adjustable in particular in terms of quantity and/or direction.

10. Apparatus as claimed in Claim 1 or Claim 8, **characterised in that** adjustment of the nozzle (4) and/or of the deflection vanes (25) thereof and/or the activation of the deflection flow takes place by motor and under program control.

11. Apparatus as claimed in Claim 1, **characterised in that** the nozzle (4, 24, 34) is mounted on a mould part (1, 2) itself.

12. Apparatus as claimed in Claim 1, **characterised in that** a preliminary or final compression of the fibres takes place by means of a temporary auxiliary upper mould.

13. Apparatus in particular as claimed in Claim 1 or Claim 12, **characterised in that** the mould or the temporary auxiliary upper mould has adjustable flaps for controlling the local discharge of air.

14. Method using apparatus as claimed in Claim 1, **characterised in that** before the bonding, in particular before the final compression of the fibre at least one cover layer (30a, 30b) is placed into at least a part the mould (1, 2) or is placed onto the blown-in, fibres.

15. Method as claimed in Claim 14, **characterised in that**, already before the fibres are blown in, the cover layer (30a, 30b) is placed into the mould (1, 2), in particular that the cover layer (30a, 30b) held in the mould (1, 2) by application of negative pressure or locally by clamping or snap connections.

## Revendications

1. Dispositif de fabrication de pièces moulées tridimensionnelles (30) en un matériau fibreux, par utilisation d'un moule (1, 2) en plusieurs parties dont la face intérieure (1a, 2a) détermine au moins partiellement le profil de la pièce moulée, les fibres étant insufflées dans le moule par un courant d'air, par l'intermédiaire d'au moins une buse (4), et ledit courant d'air s'échappant ensuite en empruntant des orifices pratiqués dans le moule, de sorte que les fibres se déposent à la face intérieure dudit moule, après quoi lesdites fibres sont encore éventuellement soumises à un compactage localisé avant d'être collées les unes aux autres par apport de chaleur et sont, pour finir, prélevées du moule (1, 2) à l'issue du refroidissement, en tant que pièce moulée (30),
**caractérisé par le fait**
**que** la direction de soufflage de la buse (4, 24, 34) peut subir un pivotement, et l'axe de pivotement s'étend à proximité de la face extérieure de la pièce moulée ; et par le fait que l'insufflation des fibres est opérée par l'intermédiaire de plusieurs buses (4, 24, 34) activées à des instants différents.

2. Dispositif selon la revendication 1,
**caractérisé par le fait**
**que** la buse (4, 24, 34) ou sa direction de soufflage accomplit, lors du processus d'insufflation, un mouvement de va-et-vient à une fréquence d'au moins 0,3 Hz.

3. Dispositif selon la revendication 1,
**caractérisé par le fait**
**que** plusieurs buses (4, 24, 34) sont raccordées à un conduit annulaire commun, de préférence par l'intermédiaire de vannes respectives.

4. Dispositif selon, la revendication 1,
**caractérisé par le fait**
**qu'**un orifice obturable, destiné à la purge d'air, est situé sur la buse (4, 24, 34) ou devant cette dernière.

5. Dispositif selon la revendication 1,
**caractérisé par le fait**
**que**, durant l'insufflation des fibres, une mesure de la pression d'air est exécutée dans le conduit de desserte de la buse, dans ladite buse ou dans le moule, et il est mis un terme au processus d'emplissage lorsqu'une valeur limite déterminée est atteinte.

6. Dispositif selon la revendication 5,
**caractérisé par le fait**
**que** la mesure de la pression d'air se présente comme une mesure de la pression dynamique.

7. Dispositif selon, la revendication 1,
**caractérisé par le fait**
**que** le réglage de la direction de soufflage s'opère par un réglage de la buse (4), notamment par l'intermédiaire d'un appendice (4a, 4b) de ladite buse qui peut être réglé par rapport à cette dernière.

8. Dispositif selon la revendication 1,
**caractérisé par le fait**
**que** le réglage de la direction de soufflage s'opère par un réglage d'ailettes déflectrices (25), disposées dans la région de l'écoulement de sortie.

9. Dispositif selon la revendication 1,
**caractérisé par le fait**
**que** le réglage de la direction de soufflage s'opère au moyen d'un écoulement déflecteur additionnel affluant par le côté, sachant qu'il est notamment possible de régler la quantité et/ou la direction dudit écoulement déflecteur.

10. Dispositif selon la revendication 1 ou 8,
**caractérisé par le fait**
**que** le réglage de la buse (4) et/ou de ses ailettes déflectrices (25), et/ou l'activation de l'écoulement déflecteur, s'opére(nt) en mode motorisé et avec commande programmée.

11. Dispositif selon la revendication 1,
**caractérisé par le fait**
**que** la buse (4, 24, 34) est montée sur une partie du moule (1, 2) proprement dite.

12. Dispositif selon la revendication 1,
**caractérisé par le fait**
**qu'**un compactage préalable ou définitif des fibres est exécuté au moyen d'un moule supérieur auxiliaire provisoire.

13. Dispositif notamment selon la revendication 1 ou 12,
**caractérisé par le fait**
**que** le moule, ou le moule supérieur auxiliaire provisoire, est muni de clapets réglables en vue de commander l'évacuation d'air localisée.

14. Procédé impliquant l'utilisation d'un dispositif selon la revendication 1,
**caractérisé par le fait**
**que**, préalablement à la solidarisation collée, en particulier préalablement au compactage définitif des fibres, au moins une couche de recouvrement (30a, 30b) est introduite dans au moins une partie du moule (1, 2), ou est déposée sur les fibres insufflées.

15. Procédé selon la revendication 14,
**caractérisé par le fait**
**que** la couche de recouvrement (30a, 30b) est introduite dans le moule (1, 2) avant même l'insufflation des fibres ; notamment par le fait que ladite couche de recouvrement (30a, 30b) est retenue dans ledit moule (1, 2) par application d'une dépression, ou localement au moyen de liaisons par coincement ou par déclic.
